# EUROPÄISCHE PATENTANMELDUNG

(11) **EP 2 264 414 A1**
(43) Veröffentlichungstag der Anmeldung: **22.12.2010**
(21) Anmeldenummer: 09007968.2
(22) Anmeldetag: 18.06.2009
(51) Int. Cl.: G01J 1/04, G01J 1/42

(54) **Infrarot Strahlanalyse durch reflektierenden Kühlkörper**

(71) Anmelder: Wieser, Laszlo, 82194 Grübenzell (DE)
(72) Erfinder: Wieser, Laszlo, 82194 Grübenzell (DE)

(57) **Zusammenfassung**

Durch die Verwendung von Kühlkörpern mit speziellen Form, Ausrichtung und Oberfläche wird es möglich mit einem handelsüblichen Wärmekamera-Chip Infrarotstrahlen mit hoher Intensität (CO2 - Laser) zu analysieren.

Es würde die Justage und Reparatur von Tausenden bereits installierten Laseranlagen erheblich erleichtern.

## Beschreibung

Bisher wird der Laserstrahl während der Montage/Justage durch einen einfachen Kühlkörper absorbiert, der per Luft oder Wasser gekühlt wird.

Die Anwendung zielt in erster Linie auf Analyse von CO2-Laserstrahlen. Die Wellenlänge beträgt 10,6µm. Es eignen sich die Microbolometer Chips für diese Aufgabe. Sie sind bereits in den handelsüblichen Wärmebild-Kameras eingesetzt. Sie sind sehr empfindlich und lassen nur Energie im µW Bereich zu.

Ein Industrielaser kann mehrere kW Leistung bringen, also die Leistung muss um mehrerer Größenordnungen verringert werden.

Der Strahl kommt meistens mit bis zu 30-40mm Durchmesser heraus, die Sensorchips haben aber nur aktive Flächen von einigen mm Durchmesser. Ein oder mehrere Kühlkörper müssen den Strahl bündeln. Die Reflektoren sind z.B. aus Aluminium und die Oberflächen können eloxiert werden. Die scheinbar raue Fläche ist für diese Wellenlänge als Spiegel geeignet.

### Der Aufbau:

Der Laserstrahl tritt in der Öffnung des Messgerätes ein. Als erstes trifft er auf einen Parabel-Refleflektor, der ihn in 90° ablenkt und gleichzeitig abschwächt. Die Abschwächung wird durch teilreflektierenden Oberflächen gewährleistet. Weitere reflektoren lenken den immer kleiner werdenden Strahl auf den Sensor.

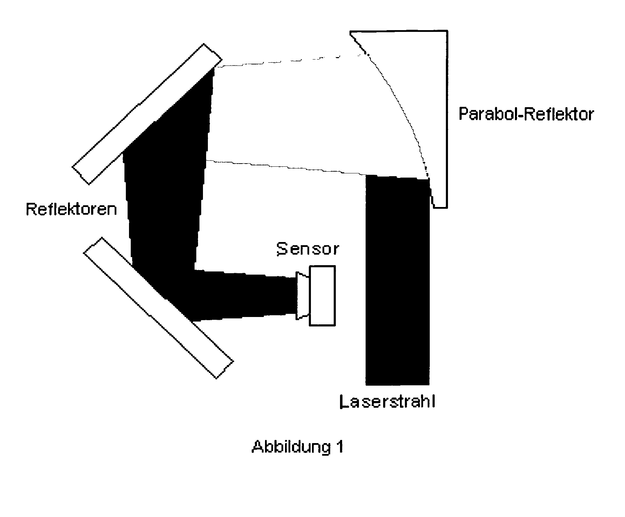

Bei richtiger Dimensionierung der Reflektor und deren Abstand kann eine naturgetreue, verkleinerte Abbildung des Strahl-Querschnitts erreicht werden. (siehe Abbildung 1)

Die Anwendung zielt auf Laser mit sehr hohen Leistungen. Die Antreffende Leistung muss soweit vermindert werden, dass der Sensor kein Schaden nimmt und nicht übersteuert wird. Die Beschichtung der Kühlkörper-Oberflächen spielt die entscheidende Rolle. Blankes Aluminium reflektiert fast 100%, schwarze fast 0% der Leistung. Dazwischen liegen einige brauchbare Varianten:

| | |
|---|---|
| Silber eloxiert : | ca. 6% Reflexion |
| Blau oder rot eloxiert: | 2-3% Reflexion |
| Schwarz eloxiert: | < 1% Reflexion |

### Ein Rechenbeispiel:

1 kW Leistung durch rot eloxierten Kühlkörper (3% Reflexion) abgelenkt:

| | | |
|---|---|---|
| 1).1 kW-> | (970 W Dissipation) | 30W |
| 2.)30 W-> | (29,1 W Dissipation) | 900 mW |
| 3.)900mW-> | (873 mW Dissipation) | 27 mW |
| 4.)27mW-> | (26,19mW Dissipation) | 810 µW |

Die grobe Selektion der Leistungsklasse kann durch einen austauschbaren Reflektor stattfinden. Feineinstellung macht die Elektronik durch verstellbarer Verstärkung und variabler Integrationszeit. So wird es möglich einen Leistungsbereich von 10W bis 10kW zu realisieren.

Die notwendigen Reflektoren werden auf einen gemeinsamen Kühlkörper montiert, der per Luft oder Wasser gekühlt wird.

### Bisherigen Methoden:

Bei der Strahlanalyse wird derzeit nur eine kleine Teilfläche ausgekoppelt und gemessen. Die Position dieser Teilfläche wird mechanisch verlagert. Das überwiegende Teil der Leistung muss ein separater Kühlkörper absorbieren.

Eine weitere Methode ist die elektrische Abschwächung des Strahls durch elektrische Modulation. In diesem Fall arbeitet die Lichtquelle (Laser) nicht unter Betriebsbedingungen. Die gemessenen Werte können von denen, welche bei voller Leistung auftreten, erheblich abweichen.

Eine optische Abschwächung durch teildurchlässige Fenster oder Linsen ist ebenfalls möglich, jedoch mit dieser Leistungsdichte sehr problematisch. Die absorbierte Leistung entsteht auf einigen mm² oder bestenfalls auf einigen cm². Die Abführung dieser Leistung ist sehr aufwendig.

In der Praxis werden zurzeit Plexiblöcke eingesetzt, die mit kurzen Impulsen beschossen werden. Entsprechend des Strahlprofils verdampft ein Teil des Blocks. Der übrig gebliebene Teil des Blocks stellt einen "Abdruck" des Strahls dar. Der Verbrauch an Plexiblöcken kann also sehr hoch sein. Die entstehenden Gase sind giftig und können an den umliegenden optischen Komponenten Ablagerungen verursachen.

### Vorteile gegenüber bisherigen Lösungen:

- robust
- preisgünstig
- keine bewegte Teile
- keine Verschleißteile
- Messzeit < 1 sec
- Absorbiert die volle Leistung, keine weitere Kühlkörper sind notwendig

## Patentansprüche

1. Die Oberfläche der Kühlkörper ist nicht rechtwinklig zum Strahl ausgerichtet.
Die Reflexion hat eine vom Strahl abweichende Achse. Ein, in dieser Achse positionierter Detektor kann den Querschnitt des Strahls analysieren.

2. Die Oberfläche der Kühlkörper ist so gestaltet, dass ein Teil der eintreffenden Energie reflektiert wird.
2.1 Farblich eloxierten Alu-Kühlkörper reflektieren einige Prozent der Energie
2.2 Es können mehrere Reflektoren nacheinender den Strahl auf die gewünschte Intensität abschwächen.

3. Durch eine entsprechende Krümmung der Oberfläche des Kühlkörpers kann man den reflektierten Strahl bündeln. Die Gestaltung der Oberfläche von einen oder mehreren Reflektoren ermöglicht es den Strahl zu verkleinern oder zu vergrößern bis der Strahldurchmesser mit dem Sensordurchmesser übereinstimmt
